# EUROPÄISCHE PATENTSCHRIFT

(11) **EP 3 803 285 B1**
(45) Veröffentlichungstag und Bekanntmachung des Hinweises auf die Patenterteilung: **05.07.2023**
(21) Anmeldenummer: 19723784.5
(22) Anmeldetag: 10.05.2019
(51) Int. Cl.: G01F 1/84, G01K 1/00, G01F 15/02

(54) **MESSGERÄT**
MEASURING DEVICE
APPAREIL DE MESURE

(30) Priorität: 08.06.2018 DE 102018113726
(43) Veröffentlichungstag der Anmeldung: 14.04.2021
(73) Patentinhaber: Endress + Hauser Flowtec AG, 4153 Reinach (CH)
(72) Erfinder: RAMSEYER, Severin, 4142 Münchenstein (CH)
(74) Vertreter: Waselikowski, Stefan
(86) Internationale Anmeldenummer: PCT/EP2019/062092
(87) Internationale Veröffentlichungsnummer: WO 2019/233706

(56) Entgegenhaltungen:
- DE-A1- 4 427 181
- DE-A1-102014 116 658
- DE-B4-102014 116 658
- DE-U1- 29 716 885

## Beschreibung

Die Erfindung betrifft ein Messgerät, insbesondere ein Coriolis-Messgerät, zur Messung der Durchflussgeschwindigkeit oder dem Volumendurchfluss oder der Dichte eines durch mindestens ein Messrohr strömenden Mediums, wobei das Messgerät einen Temperatursensor aufweist.

Messanordnungen mit Temperatursensoren sind bekannt, so zeigt die DE102014116658B4 eine Messanordnung mit Temperatursensor, bei welchem Temperatursensor elektrische Leitungen zum Betreiben des Temperatursensors mit einem Zusatzfixierelement separat fixiert sind.

Bei Messanordnungen mit Temperatursensor gemäß dem Stand der Technik ist das Problem gegeben, dass über die elektrischen Leitungen Wärmeenergie aus dem Temperatursensor abfließen kann und somit eine Temperaturmessung verfälscht.

Aufgabe der Erfindung ist es daher, ein Messgerät vorzuschlagen, bei welchem eine solche Verfälschung einer Temperaturmessung zumindest abgeschwächt ist.

Die Aufgabe wird gelöst durch ein Messgerät gemäß dem unabhängigen Anspruch 1.

Ein erfindungsgemäßes Messgerät, insbesondere ein Coriolis-Messgerät zur Messung der Durchflussgeschwindigkeit oder des Massedurchflusses oder der Dichte eines durch mindestens ein Messrohr strömenden Mediums, umfasst:
das mindestens eine Messrohr zum Führen des Mediums;
einen Messwandler, welcher dazu eingerichtet ist, mindestens eine Messgröße zu erfassen und jeweils zumindest einen die Messgröße repräsentierenden ersten Messwert auszugeben;
zumindest einen Temperatursensor, welcher dazu eingerichtet ist, eine Temperatur des Messrohrs zu erfassen,
eine elektronische Mess-/Betriebsschaltung, welche dazu eingerichtet ist, den Messwandler sowie den Temperatursensor zu betreiben sowie Durchfluss- bzw. Dichtemesswerte bereitzustellen,
wobei der Temperatursensor ein Sensorelement und zumindest zwei elektrisch leitfähige Zuleitungen zur elektrischen Kontaktierung des Sensorelements mit der elektronischen Mess-/Betriebsschaltung aufweist,
wobei jede Zuleitung jeweils im Bereich einer Anschlussstelle des Sensorelements mit dem Sensorelement verbunden ist,
wobei die Zuleitungen jeweils einen an die entsprechende Anschlussstelle anschließenden ersten Abschnitt aufweisen,
wobei das Sensorelement einen maximalen Umfang aufweist,
wobei der erste Abschnitt einen Abstand von weniger als 5% eines Messrohrradius zu einer Messrohrwandung aufweist, wobei eine Länge der Zuleitung im ersten Abschnitt zumindest 25% des maximalen Umfangs ist,
wobei
die Zuleitungen in ihrem jeweiligen ersten Abschnitt zumindest bereichsweise entlang des maximalen Umfangs bzw. dem maximalen Umfang folgend geführt werden,
wobei die Zuleitungen in ihrem ersten Abschnitt zumindest bereichsweise in thermischem Kontakt mit dem Messrohr sind.

Durch das zumindest bereichsweise Führen der Zuleitungen entlang des maximalen Umfangs bzw. dem maximalen Umfang folgend in thermischem Kontakt mit dem Messrohr nehmen die Zuleitungen jeweils in ihrem ersten Bereich entsprechend dem Sensorelement die Temperatur des Messrohrs an, so dass ein Wärmeabfluss über die Zuleitungen im Hinblick auf das Sensorelement gering bzw. vernachlässigbar ist.

In einer Ausgestaltung ist der thermische Kontakt zwischen Zuleitung und Messrohr durch direkten Kontakt und/oder mittels eines wärmeleitfähigen Materials wie beispielsweise eine Wärmeleitpaste oder einen Kleber hergestellt,
wobei das wärmeleitfähige Material eine Wärmeleitfähigkeit in W/(m*K) von mindestens 0.5, und insbesondere mindestens 1 und bevorzugt mindestens 2 aufweist.

Durch direktes Kontaktieren der Zuleitungen mit dem Messrohr kann der Wärmeübergang zwischen Zuleitung und Messrohr schnell erfolgen. Alternativ kann der Wärmeübergang mittels einer Wärmeleitpaste hergestellt werden, in welche die Zuleitungen zumindest teilweise eingebettet sind. Durch zusätzlichen Einsatz von Wärmeleitpaste kann der Wärmeübergang weiter verbessert werden.

In einer Ausgestaltung ist das Sensorelement beispielsweise eines aus folgender Liste: Widerstandselement, insbesondere ein Dünnschichtwiderstandselement, Peltierelement, Halbleiterelement.

In einer Ausgestaltung weist der Temperatursensor ein Befestigungselement auf, welches dazu eingerichtet ist, das Sensorelement und den jeweils ersten Abschnitt der Zuleitungen zumindest bereichsweise am Messrohr zu befestigen. Die Befestigung gewährleistet stabile Wärmeübergangsbedingungen und somit ein stabiles Funktionieren des Temperatursensors.

In einer Ausgestaltung ist das Befestigungselement ein Blech, welches dazu eingerichtet ist, das Widerstandselement sowie den jeweils ersten Abschnitt der Zuleitungen zumindest bereichsweise zu überdecken.

In einer Ausgestaltung weist das Befestigungselement einen Zentralbereich und zwei den Zentralbereich einschließenden Außenbereiche auf,
wobei der Zentralbereich das Widerstandselement sowie jeweils den ersten Abschnitt der Zuleitungen zumindest bereichsweise überdeckt, wobei das Befestigungselement in den Außenbereichen durch Schweißen am Messrohr befestigt ist.

In einer Ausgestaltung ist das Blech mehrlagig aufgebaut.

In einer Ausgestaltung weist das Blech oder mindestens eine Blechlage eine spezifische Wärmekapazität in kJ/(kg*K) von weniger als 0.9 und bevorzugt weniger als 0.7 und insbesondere weniger als 0.5 auf
und/oder
wobei das Blech oder mindestens eine Blechlage eine Wärmeleitfähigkeit in W/(m*K) von mindestens 50, und insbesondere mindestens 100 und bevorzugt mindestens 150 aufweist.

Um einen geringen Einfluss der Befestigung auf das Messrohr sowie auf den Temperatursensor sicherzustellen, ist eine hohe Wärmeleitfähigkeit und eine geringe Wärmekapazität von Vorteil.

Bei Einsatz eines mehrlagigen Blechs kann beispielsweise eine innere Blechlage dazu eingerichtet sein, die Temperaturanpassung zu übernehmen, und eine weitere, die innere Blechlage schützende Blechlage mit geringer Wärmeleitfähigkeit Korrosion der inneren Blechlage unterbinden bzw. verlangsamen.

In einer Ausgestaltung ist eine äußere vom Messrohr abgewandte erste Blechlage aus einem sauerstoffundurchlässigen und/oder wasserundurchlässigen Stoff gefertigt ist,
wobei eine zweite Blechlage aus einem Material mit hoher Wärmeleitfähigkeit und geringer Wärmekapazität gefertigt ist, wie beispielsweise aus Kupfer oder Silber oder Aluminium oder einer Legierung mit mindestens einem der aufgeführten Materialien.

In einer Ausgestaltung weisen die Zuleitungen zumindest im Bereich des Befestigungselements jeweils eine elektrische Isolierung auf, wobei die elektrische Isolierung zumindest eines der folgenden Materialien aufweist: Kunststoff wie beispielsweise Teflon, Polyimid, Polyamid, Polyethylen, oder Glas bzw. Glasgewebe, oder Keramik.

Idealerweise weist der Kunststoff eine Wärmeleitfähigkeit von mindestens 0.2 W/(m*K) auf.

In einer Ausgestaltung ist das mindestens eine Messrohr Teil des Messwandlers,
wobei der Messwandler mindestens einen Schwingungserreger aufweist, welcher dazu eingerichtet ist, dass mindestens eine Messrohr zum Schwingen anzuregen,
wobei der Messwandler mindestens zwei Schwingungssensoren aufweist, welche dazu eingerichtet sind, die Messrohrschwingung zu erfassen.

Im Folgenden wird die Erfindung anhand von Ausführungsbeispielen beschrieben.
Fig. 1 skizziert zwei beispielhafte, erfindungsgemäße Temperatursensoren, welche auf einer Messrohrwandung aufgebracht sind.
Fig. 2 skizziert zwei beispielhafte, erfindungsgemäße Temperatursensoren gemäß Fig. 1, welche jeweils mittels eines Befestigungsmittels befestigt sind.
Fig. 3 skizziert ein erfindungsgemäßes Coriolis-Messgerät.

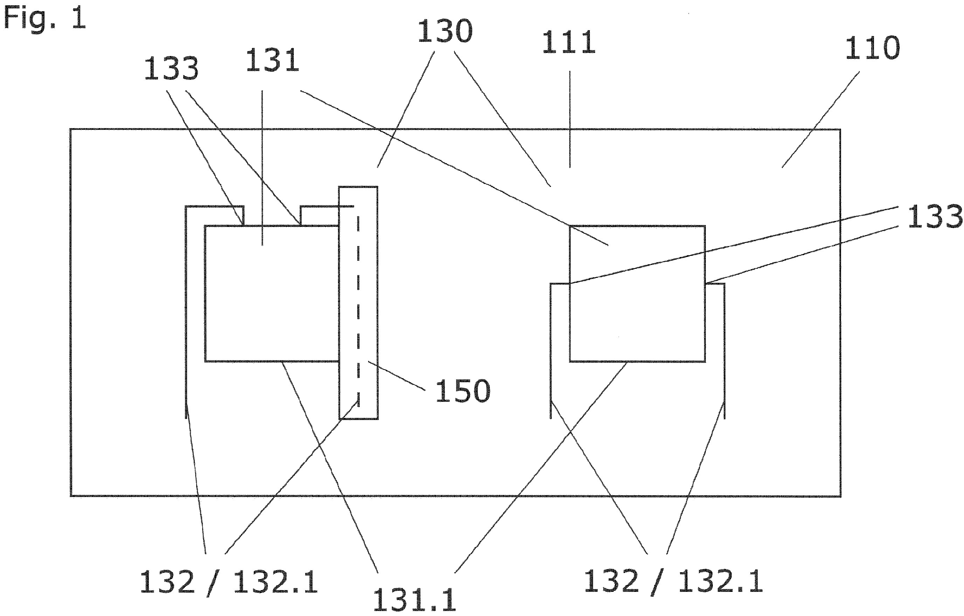

Fig. 1 skizziert zwei auf einer Messrohrwandung 111 eines Messrohrs 110 eines Messgeräts der Durchflussmesstechnik aufgebrachte erfindungsgemäße Temperatursensoren 130, welche jeweils eine Sensorelement 131 und jeweils zwei Zuleitungen 132 aufweisen. Die Zuleitungen werden jeweils in einem ersten Abschnitt 132.1 zumindest bereichsweise entlang eines maximalen Umfangs 131.1 des jeweiligen Sensorelements geführt und stehen in thermischem Kontakt mit dem Messrohr. Der thermische Kontakt mit dem Messrohr kann durch direkten Kontakt zwischen Zuleitung und Messrohr und/oder wie an einer Zuleitung beispielhaft dargestellt mittels einer Wärmeleitpaste 150 hergestellt sein. Im Bereich von Anschlussstellen der Zuleitungen an den jeweiligen Sensorelementen kann auf das Führen der Zuleitungen entlang des maximalen Umfangs verzichtet werden, um mechanische Belastungen der Zuleitungen beispielsweise durch Knicken zu vermeiden. Entsprechendes gilt im Bereich von Ecken bzw. Kanten des Sensorelements. Ein Messrohr eines Messgeräts kann beliebig viele Temperatursensoren aufweisen, die in Fig. 1 gezeigte Anordnung hat rein darstellerischen Charakter und ist nicht einschränkend auszulegen.

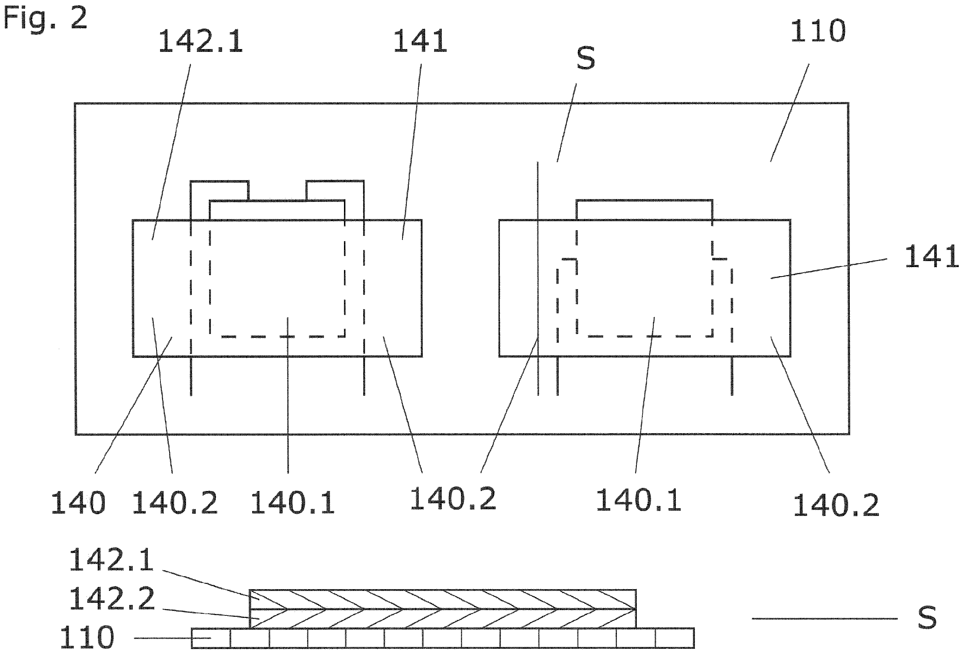

Fig. 2 skizziert die zwei in Fig. 1 gezeigten Temperatursensoren, welche nun jeweils ein Befestigungselement 140 aufweisen. Das Befestigungselement kann wie hier skizziert ein Blech 141 sein, welches in Außenbereichen 140.2 am Messrohr beispielsweise durch Schweißen befestigt ist, und mittels eines Zentralbereichs 140.1 das darunterliegende Sensorelement sowie die Zuleitungen zumindest bereichsweise fixiert. Das Blech 140 kann wie in der Schnittdarstellung S gezeigt mehrlagig sein. Eine erste, vom Messrohr abgewandte Blechlage 142.1 ist dabei bevorzugt aus einem rostfreien, insbesondere schweißbaren Stahl gefertigt. Eine zweite Blechlage ist für eine Temperaturanpassung eingerichtet und ist aus einem Material mit hoher Wärmeleitfähigkeit und/oder geringer Wärmekapazität gefertigt, wie beispielsweise aus Kupfer oder Silber oder Aluminium oder einer Legierung mit mindestens einem der aufgeführten Materialien. Die Befestigung gewährleistet stabile Wärmeübergangsbedingungen zwischen Messrohr und Zuleitungen sowie Sensorelement und somit ein stabiles Funktionieren des Temperatursensors. Das Material des Blechs oder mindestens einer Blechlage weist eine spezifische Wärmekapazität in kJ/(kg*K) von weniger als 0.9 und bevorzugt weniger als 0.7 und insbesondere weniger als 0.5 auf und/oder das Material des Blechs oder mindestens einer Blechlage weist eine Wärmeleitfähigkeit in W/(m*K) von mindestens 50, und insbesondere mindestens 100 und bevorzugt mindestens 150 auf. Um einen geringen Einfluss der Befestigung auf das Messrohr sowie auf den Temperatursensor sicherzustellen, ist eine hohe Wärmeleitfähigkeit und eine geringe Wärmekapazität von Vorteil.

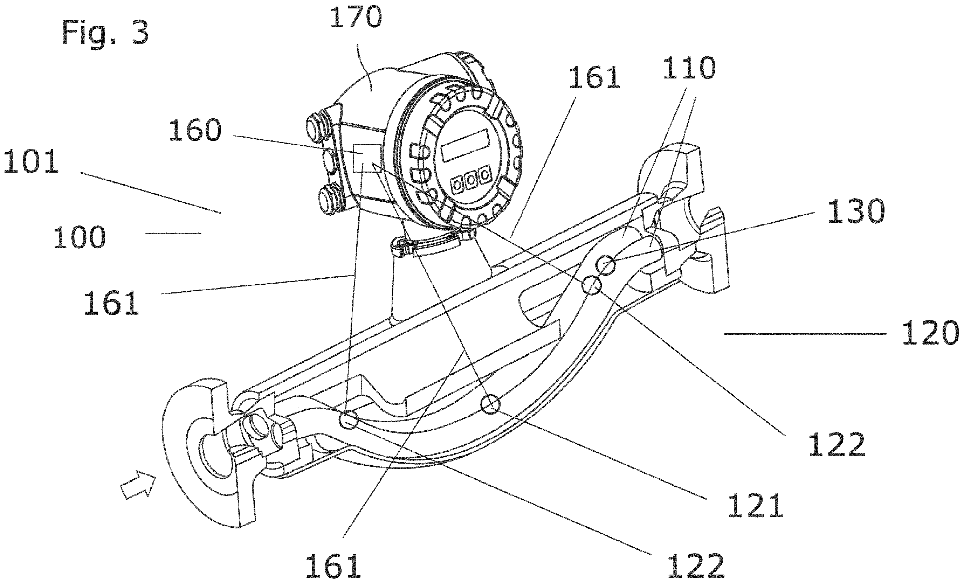

Fig. 3 skizziert ein Coriolis-Messgerät 101 mit einem Messwandler 120 und einem Elektronikgehäuse 170, in welchem eine elektronische Mess-/Betriebsschaltung 160 angeordnet ist. Der Messwandler umfasst zwei Messrohre 110, welche dazu eingerichtet sind, ein Medium zu führen, sowie einen Schwingungserreger 121 und zwei Schwingungssensoren 122. Der Schwingungserreger ist dazu eingerichtet, die Messrohre zu charakteristischen Schwingungen anzuregen, welche von den Schwingungssensoren erfasst und zu einer Durchfluss- und/oder Dichtemessung des Mediums herangezogen werden können. Der Schwingungserreger, sowie die Schwingungssensoren sind mittels elektrischer Verbindungen mit der elektronischen Mess-/Betriebsschaltung verbunden. Ein erfindungsgemäßer Temperatursensor 130 ist dazu eingerichtet, die Temperatur eines Messrohrs zu erfassen.

Coriolis-Messgeräte sind nicht auf das Vorhandensein zweier Messrohre beschränkt, es sind auch Messgeräte mit einem Messrohr oder auch vier Messrohren bekannt. Auch die Anzahlen der Schwingungserreger sowie Schwingungssensoren sowie Temperatursensoren sind nicht auf die hier dargestellten Anzahlen beschränkt, Fig. 3 ist rein darstellerisch und nicht einschränkend auszulegen.

### Bezugszeichenliste

- 100: Messgerät
- 101: Coriolis-Messgerät
- 110: Messrohr
- 111: Messrohrwandung
- 120: Messwandler
- 121: Schwingungserreger
- 122: Schwingungssensor
- 130: Temperatursensor
- 131: Sensorelement
- 131.1: maximaler Umfang
- 132: Zuleitung
- 132.1: erster Abschnitt
- 132.2: elektrische Isolierung
- 133: Anschlussstelle
- 140: Befestigungselement
- 140.1: Zentralbereich
- 140.2: Außenbereiche
- 141: Blech
- 142: Blechlage
- 142.1: erste Blechlage
- 142.2: zweite Blechlage
- 150: Wärmeleitpaste
- 160: elektronische Mess-/Betriebsschaltung
- 161: elektrische Verbindungen
- 170: Elektronikgehäuse

## Patentansprüche

1. Messgerät (100), insbesondere ein Coriolis-Messgerät (101), zur Messung der Durchflussgeschwindigkeit oder dem Volumendurchfluss oder der Dichte eines durch mindestens ein Messrohr strömenden Mediums, umfassend:
das mindestens eine Messrohr (110) zum Führen des Mediums;
einen Messwandler (120), welcher dazu eingerichtet ist, mindestens eine Messgröße zu erfassen und jeweils zumindest einen die Messgröße repräsentierenden ersten Messwert auszugeben;
zumindest einen Temperatursensor (130), welcher dazu eingerichtet ist, eine Temperatur des Messrohrs zu erfassen,
eine elektronische Mess-/Betriebsschaltung (140), welche dazu eingerichtet ist, den Messwandler sowie den Temperatursensor zu betreiben sowie Durchfluss- bzw. Dichtemesswerte bereitzustellen,
wobei der Temperatursensor ein Sensorelement (131) und zumindest zwei elektrisch leitfähige Zuleitungen (132) zur elektrischen Kontaktierung des Sensorelements mit der elektronischen Mess-/Betriebsschaltung aufweist,
wobei jede Zuleitung jeweils im Bereich einer Anschlussstelle (133) des Sensorelements mit dem Sensorelement verbunden ist,
wobei die Zuleitungen jeweils einen an die entsprechende Anschlussstelle anschließenden ersten Abschnitt (132.1) aufweisen,
wobei das Sensorelement einen maximalen Umfang aufweist,
wobei der erste Abschnitt einen Abstand von weniger als 5% eines Messrohrradius zu einer Messrohrwandung (111) aufweist, wobei eine Länge der Zuleitung im ersten Abschnitt zumindest 25% des maximalen Umfangs des Sensorelements ist,
wobei die Zuleitungen in ihrem jeweiligen ersten Abschnitt zumindest bereichsweise entlang des maximalen Umfangs des Sensorelements geführt werden,
wobei die Zuleitungen in ihrem ersten Abschnitt zumindest bereichsweise in thermischem Kontakt mit dem Messrohr sind.

2. Messgerät nach Anspruch 1,
wobei der thermische Kontakt zwischen Zuleitung und Messrohr durch direkten Kontakt und/oder mittels eines wärmeleitfähigen Materials hergestellt ist,
wobei das wärmeleitfähige Material eine Wärmeleitfähigkeit in W/(m*K) von mindestens 0.5, und insbesondere mindestens 1 und bevorzugt mindestens 2 aufweist.

3. Messgerät nach einem der vorigen Ansprüche,
wobei das Sensorelement beispielsweise eines aus folgender Liste ist:
Widerstandselement, insbesondere ein Dünnschichtwiderstandselement, Peltierelement, Halbleiterelement.

4. Messgerät nach einem der vorigen Ansprüche,
wobei der Temperatursensor ein Befestigungselement (140) aufweist, welches dazu eingerichtet ist, das Widerstandselement und den jeweils ersten Abschnitt der Zuleitungen zumindest bereichsweise am Messrohr zu befestigen.

5. Messgerät nach Anspruch 4,
wobei das Befestigungselement ein Blech (141) ist, welches dazu eingerichtet ist, das Widerstandselement sowie den jeweils ersten Abschnitt der Zuleitungen zumindest bereichsweise zu überdecken.

6. Messgerät nach Anspruch 4 oder 5,
wobei das Befestigungselement einen Zentralbereich (140.1) und zwei den Zentralbereich einschließenden Außenbereiche (140.2) aufweist,
wobei der Zentralbereich das Sensorelement sowie jeweils den ersten Abschnitt der Zuleitungen zumindest bereichsweise überdeckt, wobei das Befestigungselement in den Außenbereichen durch Schweißen am Messrohr befestigt ist.

7. Messgerät nach einem der Ansprüche 5 oder 6,
wobei das Blech mehrlagig aufgebaut ist.

8. Messgerät nach einem der Ansprüche 5 bis 7,
wobei das Blech oder mindestens eine Blechlage (142) eine spezifische Wärmekapazität in kJ/(kg*K) von weniger als 0.9 und bevorzugt weniger als 0.7 und insbesondere weniger als 0.5 aufweist
und/oder
wobei das Blech oder mindestens eine Blechlage eine Wärmeleitfähigkeit in W/(m*K) von mindestens 50, und insbesondere mindestens 100 und bevorzugt mindestens 150 aufweist.

9. Messgerät nach Anspruch 8,
wobei eine äußere vom Messrohr abgewandte erste Blechlage (142.1) aus einem sauerstoffundurchlässigen und/oder wasserundurchlässigen Stoff gefertigt ist,
wobei eine zweite Blechlage (142.2) beispielsweise aus Kupfer oder Silber gefertigt ist.

10. Messgerät nach einem der vorigen Ansprüche,
wobei die Zuleitungen zumindest im Bereich des Befestigungselements jeweils eine elektrische Isolierung (132.2) aufweisen, wobei die elektrische Isolierung zumindest eines der folgenden Materialien aufweist: Kunststoff wie beispielsweise Teflon, Polyimid, Polyamid, Polyethylen, oder Glas bzw. Glasgewebe, oder Keramik.

11. Messgerät nach einem der vorigen Ansprüche,
wobei das Messgerät ein Coriolis-Messgerät (101) ist,
wobei das mindestens eine Messrohr Teil des Messwandlers ist,
wobei der Messwandler mindestens einen Schwingungserreger (121) aufweist, welcher dazu eingerichtet ist, dass mindestens eine Messrohr zum Schwingen anzuregen,
wobei der Messwandler mindestens zwei Schwingungssensoren (122) aufweist, welche dazu eingerichtet sind, die Messrohrschwingung zu erfassen,
wobei die elektronische Mess-/Betriebsschaltung weiter dazu eingerichtet ist, auf Basis von mittels der Schwingungssensoren gemessenen Schwingungseigenschaften des Messrohrs Durchflussmesswerte und/oder Dichtemesswerte zu ermitteln und bereitzustellen,
wobei die elektronische Mess-/Betriebsschaltung mittels elektrischer Verbindungen (161) mit den Schwingungssensoren sowie mit dem mindestens einen Schwingungserreger verbunden ist.

12. Coriolis-Messgerät (101) nach Anspruch 11,
wobei das Messgerät insbesondere ein Elektronikgehäuse (80) zum Behausen der elektronischen Mess-/Betriebsschaltung aufweist.

## Claims

1. Measuring device (100), particularly a Coriolis measuring device (101), for measuring the flow velocity or volume flow or density of a medium flowing through at least one measuring tube, comprising:
the at least one measuring tube (110) to conduct the medium;
a transducer (120), which is designed to capture at least a measured variable and to output at least a first measured value representing the measured variable;
at least a temperature sensor (130), which is designed to measure a temperature of the measuring tube,
an electronic measuring/operating circuit (140), which is designed to operate the transducer and the temperature sensor and to provide flow or density measured values,
wherein the temperature sensor has a sensor element (131) and at least two electrically conductive supply lines (132) to establish electric contact between the sensor element and the electronic measuring/operating circuit,
wherein each supply line is connected to the sensor element in the area of a connection point (133) of the sensor element,
wherein the supply lines each have a first section (132.1) that follows on from the corresponding connection point,
wherein the sensor element has a maximum circumference,
wherein the first section has a distance of less than 5% of a measuring tube radius to a measuring tube wall (111), wherein
a length of the supply line in the first section is at least 25% of the maximum circumference of the sensor element,
wherein, in their first section, the supply lines are guided, at least in sections, along the maximum circumference of the sensor element,
wherein, in their first section, the supply lines are in thermal contact with the measuring tube at least in sections.

2. Measuring device as claimed in Claim 1,
wherein the thermal contact between the supply line and the measuring tube is established through direct contact and/or by means of a heat-conducting material,
wherein the heat-conducting material has a thermal conductivity in W/(m*K) of at least 0.5, and particularly at least 1 and preferably at least 2.

3. Measuring device as claimed in one of the previous claims,
wherein the sensor element is, for example, one of the following list:
resistance element, particularly a thin-film resistance element, Peltier element, semi-conductor element.

4. Measuring device as claimed in one of the previous claims,
wherein the temperature sensor has a fastening element (140), which is configured to secure the resistance element and the first section of the supply lines on the measuring tube at least in sections.

5. Measuring device as claimed in Claim 4,
wherein the fastening element is a metal plate (141), which is designed to cover the resistance element and the first section of the supply lines at least in sections.

6. Measuring device as claimed in Claim 4 or 5,
wherein the fastening element has a central section (140.1) and two outer sections (140.2) enclosing the central section, wherein the central section covers the sensor element and the first section of the supply lines at least in sections, wherein the fastening element is secured on the measuring tube in the outer sections via welding.

7. Measuring device as claimed in one of the Claims 5 or 6,
wherein the metal plate has multiple layers.

8. Measuring device as claimed in one of the Claims 5 to 7,
wherein the metal plate or at least a metal layer (142) has a specific thermal capacity in kJ/(kg*K) of less than 0.9 and preferably less than 0.7 and particularly less than 0.5
and/or
wherein the metal plate or at least a metal layer has a thermal conductivity in W/(m^{∗}K) of at least 50 and particularly at least 100 and preferably at least 150.

9. Measuring device as claimed in Claim 8,
wherein an outer first metal layer (142.1) facing away from the measuring tube is made from a substance that is impermeable to oxygen and/or impermeable to water,
wherein a second metal layer (142.2) is made, for example, from copper and silver.

10. Measuring device as claimed in one of the previous claims,
wherein the supply lines have an electrical insulation (132.2) at least in the area of the fastening element, wherein the electrical insulation has at least one of the following materials: plastic such as Teflon, polyamide, polyethylene, or glass or glass fabric, or ceramic.

11. Measuring device as claimed in one of the previous claims,
wherein the measuring device is a Coriolis measuring device,
wherein the at least one measuring tube is part of the transducer,
wherein the transducer has at least a vibration exciter (121), which is designed to excite the at least one measuring tube to vibrate,
wherein the transducer has at least two vibration sensors (122), which are designed to capture the measuring tube vibration,
wherein the electronic measuring/electronics circuit is further designed to determine and provide flow measured values and/or density measured values on the basis of vibration properties of the measuring tube that are measured using the vibration sensors,
wherein the electronic measuring/electronics circuit is connected to the vibration sensors and the at least one vibration exciter using electrical connections.

12. Coriolis measuring device (10) as claimed in Claim 11, wherein the measuring device particularly has an electronics housing (80) to accommodate the electronic measuring/electronics circuit.

## Revendications

1. Appareil de mesure (100), notamment un débitmètre Coriolis (101), destiné à la mesure de la vitesse d'écoulement ou du débit volumique ou de la densité d'un produit s'écoulant à travers au moins un tube de mesure, lequel appareil comprend :
l'au moins un tube de mesure (110) destiné à guider le produit ;
un transducteur (120), lequel est conçu pour mesurer au moins une grandeur de mesure et pour émettre respectivement au moins une première valeur mesurée représentant la grandeur de mesure ;
au moins un capteur de température (130), lequel est conçu pour mesurer une température du tube de mesure,
un circuit électronique de mesure/d'exploitation (140), lequel est conçu pour faire fonctionner le transducteur ainsi que le capteur de température et pour fournir des valeurs mesurées de débit ou de densité,
le capteur de température présentant un élément capteur (131) et au moins deux lignes d'alimentation électriquement conductrices (132) pour la mise en contact électrique de l'élément capteur avec le circuit électronique de mesure/d'exploitation,
chaque ligne d'alimentation étant reliée à l'élément capteur respectivement dans la zone d'un point de raccordement (133) de l'élément capteur,
les lignes d'alimentation présentant respectivement une première section (132.1) se raccordant au point de raccordement correspondant,
l'élément capteur présentant une circonférence maximale,
la première section présentant une distance de moins de 5 % d'un rayon de tube de mesure par rapport à une paroi de tube de mesure (111), une longueur de la ligne d'alimentation dans la première section étant d'au moins 25 % de la circonférence maximale de l'élément capteur,
les lignes d'alimentation étant guidées dans leur première section respective au moins par zones le long de la circonférence maximale de l'élément capteur,
les lignes d'alimentation étant, dans leur première section, au moins par zones en contact thermique avec le tube de mesure.

2. Appareil de mesure selon la revendication 1,
pour lequel le contact thermique entre la ligne d'alimentation et le tube de mesure est établi par contact direct et/ou au moyen d'un matériau thermoconducteur, le matériau thermoconducteur présentant une conductivité thermique en W/(m*K) d'au moins 0,5, et notamment d'au moins 1, et de préférence d'au moins 2.

3. Appareil de mesure selon l'une des revendications précédentes,
pour lequel l'élément capteur est, par exemple, l'un des éléments suivants :
élément de résistance, notamment un élément de résistance à couche mince, élément Peltier, élément semi-conducteur.

4. Appareil de mesure selon l'une des revendications précédentes,
pour lequel le capteur de température présente un élément de fixation (140), lequel est conçu pour fixer l'élément de résistance et la première section respective des lignes d'alimentation au moins par zones sur le tube de mesure.

5. Appareil de mesure selon la revendication 4,
pour lequel l'élément de fixation est une tôle (141), laquelle est conçue pour recouvrir au moins par zones l'élément de résistance ainsi que la première section respective des lignes d'alimentation

6. Appareil de mesure selon la revendication 4 ou 5,
pour lequel l'élément de fixation présente une zone centrale (140.1) et deux zones extérieures (140.2) entourant la zone centrale,
la zone centrale recouvrant au moins partiellement l'élément capteur ainsi que respectivement la première section des lignes d'alimentation, l'élément de fixation étant fixé au tube de mesure par soudage dans les zones extérieures.

7. Appareil de mesure selon l'une des revendications 5 ou 6,
pour lequel la tôle est constituée de plusieurs couches.

8. Appareil de mesure selon l'une des revendications 5 à 7,
pour lequel la tôle ou au moins une couche de tôle (142) présente une capacité thermique spécifique en kJ/(kg*K) de moins de 0,9 et de préférence de moins de 0,7 et notamment de moins de 0,5
et/ou
pour lequel la tôle ou au moins une couche de tôle présente une conductivité thermique en W/(m*K) d'au moins 50, et notamment d'au moins 100 et de préférence d'au moins 150.

9. Appareil de mesure selon la revendication 8,
pour lequel une première couche de tôle (142.1) extérieure, opposée au tube de mesure, est fabriquée en un matériau imperméable à l'oxygène et/ou à l'eau, une deuxième couche de tôle (142.2) étant fabriquée par exemple en cuivre ou en argent.

10. Appareil de mesure selon l'une des revendications précédentes,
pour lequel les lignes d'alimentation présentent chacune une isolation électrique (132.2) au moins dans la zone de l'élément de fixation, l'isolation électrique présentant au moins l'un des matériaux suivants : matière plastique telle que téflon, polyimide, polyamide, polyéthylène, ou verre ou tissu de verre, ou céramique.

11. Appareil de mesure selon l'une des revendications précédentes,
l'appareil de mesure étant un débitmètre Coriolis (101),
l'au moins un tube de mesure faisant partie du transducteur,
le transducteur comprenant au moins un excitateur de vibrations (121) conçu pour faire vibrer l'au moins un tube de mesure,
le transducteur comprenant au moins deux capteurs de vibrations (122) conçus pour mesurer les vibrations du tube de mesure,
le circuit électronique de mesure/d'exploitation étant en outre conçu pour déterminer et mettre à disposition des valeurs mesurées de débit et/ou des valeurs mesurées de densité sur la base des propriétés de vibration du tube de mesure mesurées au moyen des capteurs de vibrations,
le circuit électronique de mesure/d'exploitation étant relié aux capteurs de vibrations ainsi qu'à l'au moins un excitateur de vibrations au moyen de connexions électriques (161).

12. Débitmètre Coriolis (101) selon la revendication 11,
lequel débitmètre comprend notamment un boîtier électronique (80) destiné à loger le circuit électronique de mesure/d'exploitation.
